# EUROPÄISCHE PATENTSCHRIFT

(11) **EP 1 375 550 B1**
(45) Veröffentlichungstag und Bekanntmachung des Hinweises auf die Patenterteilung: **07.02.2007**
(21) Anmeldenummer: 03012667.6
(22) Anmeldetag: 04.06.2003
(51) Int. Cl.: C08G 18/80, C09D 175/04, C03C 25/32

(54) **Schlichtezusammensetzung**
Sizing composition
Composition d'encollage

(30) Priorität: 17.06.2002 DE 10226924
(43) Veröffentlichungstag der Anmeldung: 02.01.2004
(73) Patentinhaber: Bayer MaterialScience AG, 51368 Leverkusen (DE)
(72) Erfinder: Rische, Thorsten, Dr., 59423 Unna (DE); Naujoks, Karin, 51519 Odenthal (DE); Feller, Thomas, 42659 Solingen (DE); Gürtler, Christoph, Dr., 50676 Köln (DE); Mazanek, Jan, Dr., 51061 Köln (DE)

(56) Entgegenhaltungen:
- EP-A- 0 178 398
- EP-A- 0 802 210
- EP-A- 0 900 814
- US-A- 5 157 074

## Beschreibung

Die Erfindung betrifft neue Schlichtezusammensetzungen, deren Herstellung und Verwendung.

Die Verwendung von Härterkomponenten in Schlichten auf Basis von blockierten Polyisocyanaten ist beispielsweise aus der EP-A 0 792 900 bekannt. Mit Aralkylaminen blockierte Polyisocyanate und deren besondere Eignung in Schlichten, insbesondere Glasfaserschlichten wird nicht beschrieben.

Die wichtigsten Verbindungen, die zur Blockierung von Polyisocyanaten eingesetzt werden sind ε-Caprolactam, Butanonoxim, Malonsäureester, sekundäre Amine sowie Triazol- und Pyrazolderivate, so wie sie z.B. in den Patentschriften EP-A 0 576 952, EP-A 0 566 953, EP-A 0 159 117, US-A 4 482 721, WO 97/12924 oder EP-A 0 744 423 beschrieben sind.

Sekundäre Amine, u.a. auch Aralkyl-substituierte Amine als Blockierungsmittel sind aus der EP-A 0 096 210 bekannt. Der Einsatz solcher Amine in wässrigen Systemen, insbesondere in Schlichten ist aus der EP-A 0 096 210 jedoch nicht bekannt.

Obwohl die auf Seite 2, Zeilen 20-24 der EP-A 0 096 210 dargestellte Formel eine große Zahl Diamine umfasst, wird auf Seite 3 Zeile 8 ff. aber darauf hingewiesen, dass nicht alle sekundären Amine sich Blockierungsmittel eignen. Gemäß Seite 5 Zeilen 20-29 ist nur eine recht kleine Anzahl solcher Diamine als geeignet aufgeführt. Auch die Beispiele auf Seite 9 und 10 betreffen lediglich Dialkylamine wie Diisopropylamin, substituierte sekundäre cycloaliphatische Amine wie substituierte Cyclohcxylamine oder cycloaliphatische N-Heterocyclen wie 2,2,4,6 Tetramethylpiperidin. Mit Ausnahme von Diisopropylamin werden diese Verbindungen mit Isocyanaten bei Temperaturen von mindestens 120°C umgesetzt, so dass der Fachmann davon ausgehen muss, dass die zur weiteren Umsetzung notwendige Abspaltung dieser Blockierungsmittel erst bei deutlich höheren Temperaturen stattfindet.

In der EP-A 0 178 398 wurde festes blockiertes Isophorondiisocyanat als Härter für Pulverlacke genannt. Auch hier wurden Aralkyl-substituierte sekundäre Amine als Blockierungsmittel und N-tert.-Butyl-benzylamin genannt, allerdings ohne ein konkretes Beispiel. In der EP-A 0 787 754 wurden solche Blockierungsmittel für ausgewählte Polyisocyanate als Härter für Pulverlacke beansprucht; N-tert.-Butylbenzylamin oder andere Aralkyl-substituierte Diamine werden jedoch weder in der Offenbarung noch in den Beispielen genannt. Flüssige lösemittelhaltige Zubereitungen oder wässrige bzw. wasserverdünnbare blockierte Polyisocyanate und insbesondere deren Eignung für Schlichten sind in beiden Dokumenten nicht genannt.

Bei Herstellung von Schlichten, insbesondere Glasfaserschlichten, werden wasserdispergierbare bzw. wasserlösliche, meistens mit ε-Caprolactam und Butanonoxim blockierte Isocyanate eingesetzt.

US-A-5157074 offenbart wässrige Zusammensetzungen enthaltend zumindest teilweise blockierte Polyisocyanate. Als Blockierungsmittel werden u.a-sekundäre aromatische Amine genannt. Die Zusammensetzungen sind z.B. als Bindemittel für Glasfasern geeignet.

Während bei ε-Caprolactam blockierten Isocyanaten in der Regel Einbrenntemperaturen um 160°C angewandt werden, können blockierte Härter, bei denen Butanonoxim als Blockierungsmittel eingesetzt wurde, schon bei 10-20°C niedrigeren Temperaturen deblockiert werden. Allerdings werden bei diesen Temperaturen in manchen Schlichten die gewünschten Eigenschaften nicht mehr erreicht. Hohe Deblockierungs- bzw. Trocknungstemperaturen bedingen außerdem oftmals eine unerwünschte Thermovergilbung der Schlichten. Darüber hinaus werden diese Deblockierungstemperaturen inzwischen aus Kostengründen als zu hoch empfunden, so dass der Bedarf nach Schlichten entstanden ist, die Vemetzersysteme enthalten, die bei niedrigeren Temperaturen als beim Butanonoxim vemetzen.

Die Herstellung von wasserdispergierbaren oder wasserlöslichen blockierten Polyisocyanaten ist grundsätzlich bekannt und wird beispielsweise in der DE-A 24 56 469 und der DE-A 28 53 937 beschrieben.

Die Aufgabe der vorliegenden Erfindung bestand daher in der Bereitstellung von Schlichtezusammensetzungen die wasserdispergierbare oder wasserlösliche blockierte Isocyanate mit einer signifikant niedrigeren Deblockierungstemperatur im Vergleich zu Härtern des Stands der Technik enthalten.

Es wurde nun gefunden, dass Schlichten enthaltend hydrophilierte und mit Aralkylaminen blockierte Polyisocyanate, die in Wasser dispergierbar oder löslich sind, dem obengenannten Anforderungsprofil entsprechen und neben einer deutlich niedrigeren Vernetzungstemperatur eine signifikant verbesserte Hydrolysebeständigkeit aufweisen.

Gegenstand der vorliegenden Erfindung sind daher Schlichtezusammensetzungen enthaltend:
1) wasserdispergierbare bzw. wasserlösliche und mit Aralkylaminen blockierte Polyisocyanate,
2) filmbildende Harze,
3) Haftvermittler,
4) Gleitmittel,
5) gegebenenfalls Antistatika, sowie
6) gegebenenfalls weitere Zusatz- und Hilfsstoffe.

Die wasserdispergierbaren bzw. wasserlöslichen blockierten Polyisocyanate 1) sind aufgebaut aus:
A) mindestens einem Polyisocyanat mit aliphatisch, cycloaliphatisch araliphatisch und/oder aromatisch gebundenen Isocyanatgruppen,
B) mindestens einer ionischen und/oder potentiell ionischen und/oder nichtionischen Verbindung,
C) mindestens einem Blockierungsmittel, welches zu mindestens 20 Gew.-% aus Aralkylaminen besteht,
D) gegebenenfalls einem oder mehreren (cyclo)aliphatischen Mono- bzw. Polyaminen mit 1 bis 4 Aminogruppen des Molekulargewichtsbereichs bis 300,
E) gegebenenfalls einem oder mehreren mehrwertigen Alkoholen mit 1 bis 4 Hydroxylgruppen des Molekulargewichtsbereichs bis 250
   und
F) gegebenenfalls Stabilisierungsmittel und andere Hilfsstoffe sowie
G) gegebenenfalls Lösemittel.

Bevorzugt enthalten die wasserdispergierbaren bzw. wasserlöslichen mit Aralkylaminen blockierten Polyisocyanate 1) 20 bis 80 Gew.% der Komponente A), 1 bis 40 Gew.-% der Komponente B), 15 bis 60 Gew.-% der Komponente C) 0 bis 15 Gew.% der Komponente D), 0 bis 15 Gew.% der Komponente E) 0 bis 15 Gew.-% der Komponente F) und 0 bis 20 Gew.-% der Komponente G), wobei die Summe aus A bis G) sich zu 100 Gew.-% addiert.

Besonders bevorzugt enthalten die wasserdispergierbaren bzw. wasserlöslichen mit Aralkylaminen blockierten Polyisocyanate 1) 25 bis 75 Gew.% der Komponente A), 1 bis 35 Gew.-% der Komponente B), 20 bis 50 Gew.-% der Komponente C), 0 bis 10 Gew.-% der Komponente D), 0 bis 10 Gew.-% der Komponenete E), 0 bis 10 Gew.-% der Komponente F) und 0 bis 15 Gew.-% der Komponente G) wobei die Summe aus A bis G) sich zu 100 Gew.-% addiert.

Ganz besonders bevorzugt enthalten die wasserdispergierbaren bzw. wasserlöslichen, mit Aralkylaminen blockierten Polyisocyanate 1) 30 bis 70 Gew.% der Komponente A) 5 bis 30 Gew.-% der Komponente B), 25 bis 45 Gew.-% der Komponente C), 0 bis 5 Gew.-% der Komponente D), 0 bis 5 Gew.-% der Komponente E), 0 bis 5 Gew.-% der Komponente F) und 0 bis 10 Gew.-% der Komponente G), wobei die Summe aus A bis G) sich zu 100 Gew.-% addiert.

Die wasserdispergierbaren blockierten Polyisocyanate 1) können in den erfindungsgemäßen Schlichten als wässrige Lösung oder Dispersion verwendet werden. Die Lösung oder Dispersion der Polyisocyanate 1) weist einen Festkörpergehalt zwischen 10 bis 70 Gew.-%, bevorzugt von 20 bis 60 Gew.-% und besonders bevorzugt von 25 bis 50 Gew.-% auf und der Anteil von G) an der Gesamtzusammensetzung ist bevorzugt kleiner 15 Gew.-% und besonders bevorzugt kleiner 10 Gew.-% und ganz besonders bevorzugt kleiner 5 Gew.-%.

Die blockierten Polyisocyanate 1) weisen eine (mittlere) NCO-Funktionalität von 2,0 bis 5,0, bevorzugt von 2,3 bis 4,5, einen Gehalt an Isocyanatgruppen (unblockiert und blockiert) von 5,0 bis 27,0 Gew.-%, bevorzugt von 14,0 bis 24,0 Gew.-% und einen Gehalt an monomeren Diisocyanaten von weniger als 1 Gew.-%, bevorzugt weniger als 0,5 Gew.-% auf. Die Isocyanatgruppen der Polyisocyanate A) der wasserdispergierbaren bzw. wasserlöslichen blockierten Polyisocyanate 1) liegen zu mindestens 50 %, bevorzugt zu mindestens 60 % und besonders bevorzugt zu mindestens 70 % in blockierter Form vor.

Geeignete Polyisocyanate A) sind durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) Seite 185-200 beispielhaft beschrieben sind.

Geeignete Diisocyanate zur Herstellung der Polyisocyanate A) sind durch Phosgenierung oder nach phosgenfreien Verfahren, beispielsweise durch thermische Urethanspaltung, zugängliche Diisocyanate des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei der Ausgangskomponenten A) um Polyisocyanate oder Polyisocyanatgemische der genannten Art mit ausschließlich aliphatisch und/oder cycloaliphatisch gebundenen Isocyanatgruppen.

Besonders bevorzugte Ausgangskomponenten A) sind Polyisocyanate bzw. Polyisocyanatgemische mit Isocyanurat und/oder Biuretstruktur auf Basis von HDI, IPDI und/oder 4,4'-Diisocyanatodicyclohexylmethan.

Geeignete Verbindungen für die Komponente B) sind ionische oder potentiell ionische und/oder nichtionische Verbindungen.

Nichtionische Verbindungen sind beispielsweise einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38). Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; Diethylenglykol-monoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole sowie Diethylenglykol-monoalkylether. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Geeignete Verbindungen für die Komponente B) sind ebenfalls ionische oder potentiell ionische Verbindungen, die zusätzlich oder anstelle der nichtionischen Verbindungen eingesetzt werden können, wie z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren bzw. Mono- und Diaminophosphonsäuren und ihre Salze wie Dimethylolpropionsäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (z.B. in der DE-A 2 446 440, Seite 5-9, Formel I-III) sowie in kationische Gruppen überführbare Bausteine wie N-Methyldiethanolamin als hydrophile Aufbaukomponenten verwendet werden. Bevorzugte ionische oder potentielle ionische Verbindungen B) sind solche, die über Carboxy- oder Carboxylat- und/oder Sulfonatgruppen und/oder Ammoniumgruppen verfügen. Besonders bevorzugte ionische Verbindungen B) sind solche, die Carboxyl- und/oder Sulfonatgruppen als ionische oder potentiell ionische Gruppen enthalten, wie die Salze von N-(2-Aminoethyl)-β-alanin, 2-(2-Amino-ethylamino)-ethansulfonsäure, des Hydrophilierungsmittels gemäß Beispiel 1 der EP-A 0 916 647 sowie der Dimethylolpropionsäure.

Die Komponente B) ist bevorzugt eine Kombination aus nichtionischen und ionischen Hydrophilierungsmitteln. Besonders bevorzugt sind Kombinationen aus nichtionischen und anionischen Hydrophilierungsmitteln.

Als Beispiel für erfindungsgemäße -Blockierungsmittel C) seien genannt: N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1-Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin. Selbstverständlich können auch Gemische dieser Amine untereinander und/oder mit anderen Blockierungsmitteln eingesetzt werden. Dabei handelt es sich beispielsweise um Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam oder beliebige Gemische dieser Blockierungsmittel. Bevorzugt werden N-Aralkylamine wie N-(Iso)propyl-, N-n-Butyl-, N-iso-Butyl-, N-tert.-Butyl-benzylamin als Blockierungsmittel C) verwendet. Besonders bevorzugtes Blockierungsmittel C) ist N-tert. Butylbenzylamin.

Als Komponente D) kommen mono-, di-, tri-, und/oder tetra-aminofunktionelle Substanzen des Molekulargewichtsbereichs bis 300 in Betracht, wie z.B. Ethylendiamin, 1,2- und 1,3-Diaminopropan, 1,3-, 1,4- und 1,6-Diaminohexan, 1,3-Diamino-2,2-dimethylpropan, 1-Amino-3,3,5-trimethyl-5-aminoethyl-cyclohexan (IPDA), 4,4'-Diaminodicyclohexylmethan, 2,4- und 2,6-Diamino-1-methyl-cyclohexan, 4,4'-Diamino-3,3'-dimethyl-dicyclohexylmethan, 1,4-Bis-(2-amino-prop-2-yl)-cyclohexan oder Gemische dieser Verbindungen

Bei der Komponente E) handelt es sich um mono-, di-, tri- und /oder tetrahydroxyfunktionelle Substanzen des Molekulargewichts bis 250, wie z.B. Ethylenglykol, Propylenglykol, 1,4-Butandiol, 1,6-Hexandiole, Glycerin, Trimethylolethan, Trimethylolpropan, die isomeren Hexantriole, Pentaerythrit oder Gemische dieser Verbindungen.

Die wasserdispergierbaren bzw. wasserlöslichen blockierten Polyisocyanate 1) können gegebenenfalls ein Stabilisierungsmittel bzw. Stabilisierungsmittelgemisch F), enthalten. Geeignete Verbindungen F) sind z.B. Antioxidantien wie 2,6-Ditert-butyl-4-methylphenol, UV-Absorber vom Typ 2-Hydroxyphenyl-benzotriazol oder Lichtschutzmittel vom Typ der HALS-Verbindungen oder andere handelsübliche Stabilisierungsmittel, wie sie beispielsweise in "Lichtschutzmittel für Lacke" (A. Valet, Vincentz Verlag, Hannover, 1996,) und "Stabilization of Polymeric Materials" (H. Zweifel, Springer Verlag, Berlin, 1997, Appendix 3, S. 181-213) beschrieben sind.

Bevorzugt sind Stabilisierungsmittelgemische, die zum einen Verbindungen mit einen 2,2,6,6-Tetramethylpiperidinyl-Rest, (HALS-Ring) aufweisen. Der Piperidinyl-Stickstoff des HALS-Ringes ist nicht substituiert und weist keinerlei Hydrazidstrukturen auf. Besonders bevorzugt ist eine Verbindung der Formel (I) 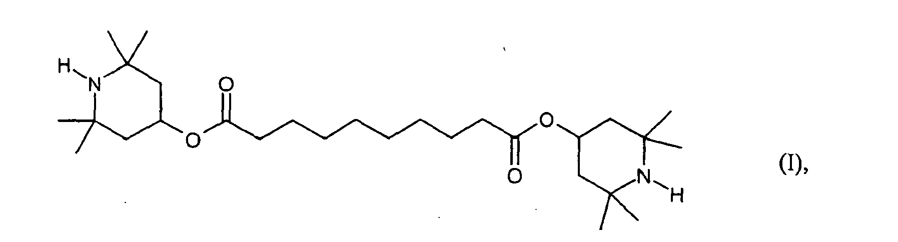 die beispielsweise unter der Bezeichnung Tinuvin^{®} 770 DF von der Firma Ciba Spezialitäten (Lampertheim, DE) vertrieben wird.

Idealerweise werden die o.g. Verbindungen kombiniert mit Substanzen die über Hydrazidstrukturen verfügen, wie beispielsweise Säurehydrazide und -dihydrazide, wie z.B. Essigsäurehydrazid Adipinsäurehydrazid, oder Adipinsäuredihydrazid oder auch Hydrazin-Addukte aus Hydrazin und cyclischen Carbonaten, wie sie beispielsweise in der EP-A 0 654 490 (S. 3, Zeile 48 bis S. 4 Zeile 3) genannt werden. Bevorzugt wird Adipinsäuredihydrazid und ein Addukt aus 2 Mol Propylencarbonat und 1 Mol Hydrazin der allgemeinen Formel (II)

-CO-NH-NH- (II)

verwendet.

Besonders bevorzugt ist das Addukt aus 2 Mol Propylencarbonat und 1 Mol Hydrazin der allgemeinen Formel (III):

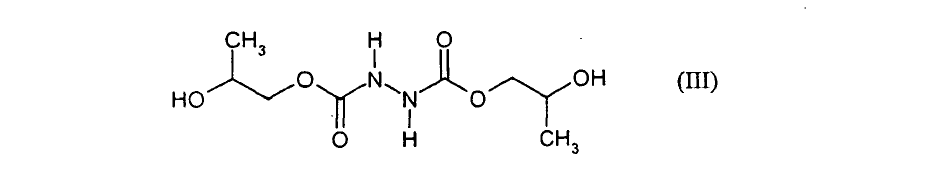

Als organische Lösemittel G) geeignet sind die an sich üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol oder Testbenzin. Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind, sind ebenfalls geeignet. Weitere Lösemittel sind beispielsweise Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel. Bevorzugte Lösemittel sind Aceton, 2-Butanon, 1-Methoxypropyl-2-acetat, Xylol, Toluol, Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol® (Shell Chemicals, Eschborn, DE), Tolu Sol^{®} (Shell Chemicals, Eschborn, DE), Shellsol^{®} (Shell Chemicals, Eschborn, DE) im Handel sind sowie N-Methylpyrrolidon. Besonders bevorzugt sind Aceton, 2-Butanon und N-Methylpyrrolidon.

Die Herstellung der wasserdispergierbaren blockierten Polyisocyanate 1) kann nach bekannten Methoden des Standes der Technik (z.B. in der DE-A 2 456 469, Spalte 7-8, Beispiel 1-5 und DE-A 2 853 937 S. 21-26, Beispiel 1-9) erfolgen.

Die wasserdispergierbaren bzw. wasserlöslichen blockierten Polyisocyanate 1) werden erhalten in dem die Komponenten A), B), C) und gegebenenfalls D), E), F) in beliebiger Reihenfolge gegebenenfalls unter zur Hilfenahme eines organischen Lösemittels G) umgesetzt werden.

Bevorzugt wird zunächst A) mit gegebenenfalls einem Teil, bevorzugt dem nichtionischen Teil der Komponente B) sowie gegebenenfalls D) und E) umgesetzt. Es erfolgt anschließend die Blockierung mit der Komponente C) und darauf folgend die Umsetzung mit dem ionische Gruppen enthaltenden Teil der Komponente B). Gegebenenfalls können dem Reaktionsgemisch organische Lösemittel G) zugesetzt werden. In einem weiteren Schritt wird gegebenenfalls noch die Komponente F) hinzugefiigt.

Die Herstellung der wässrigen Lösung oder Dispersion erfolgt anschließend, indem die wasserdispergierbaren, mit Aralkylaminen blockierten Polyisocyanate durch Zugabe von Wasser in eine wässrige Dispersion oder Lösung überführt werden. Das gegebenenfalls verwendete organische Lösemittel G) kann im Anschluss an die Dispergierung destillativ entfernt werden. Bevorzugt wird auf die Verwendung von Lösemittel G) verzichtet

Für die Herstellung der wässrigen Lösung oder Dispersion enthaltend die wasserdispergierbaren blockierten Polyisocyanate 1) werden im Allgemeinen solche Mengen an Wasser eingesetzt, dass die resultierenden Dispersionen bzw. Lösungen einen Feststoffgehalt von 10 bis 70 Gew.-%, bevorzugt 20 bis 60 Gew.-% und besonders bevorzugt 25 bis 50 Gew.-% aufweisen.

Als filmbildende Harze 2) sind in Wasser dispergierbare, emulgierbare oder lösliche Polymere geeignet. Beispiele sind Polyesterpolymere oder Epoxidgruppen enthaltende Polyesterpolymere, Polyurethane, Acrylpolymere, Vinylpolymere wie Polyvinylacetat, Polyurethandispersionen, Polyacrylatdispersionen, Polyurethan-Polyacrylat-Hybriddispersionen, Polyvinylether- bzw. Polyvinylesterdispersionen, Polystyrol- bzw. Polyacrylnitrildispersionen, die sowohl in Mischungen als auch in Kombination mit weiteren blockierten Polyisocyanaten und Aminovernetzerharzen wie z.B. Melaminharzern verwendet werden können. Der Feststoffgehalt der filmbildenden Harze beträgt vorzugsweise 10 bis 100 Gew.-% besonders bevorzugt 30 bis 100 Gew.-%.

Als Haftvermittler 3) werden z.B. die bekannten Silan-Haftvermittler verwendet, beispielsweise 3-Aminopropyltrimethoxy- bzw. triethoxysilan, N-(2-Aminoethyl)-3-aminopropyltrimethoxysilan, 3-Glycidylpropyltrimethoxysilan, Vinyltrimethoxysilan, Vinyltriethoxysilan oder 3-Methacryloxypropyltriethoxysilan. Die Konzentration der Silanhaftvermittler in den erfmdungsgemäßen Schichtemitteln beträgt bevorzugt 0,05 bis 2 Gew.-% besonders bevorzugt 0,15 bis 0,85 Gew.-% bezogen auf die gesamte Schlichte.

Die erfindungsgemäßen Schlichten enthalten ein oder mehrere nichtionische und/oder ionische Gleitmittel 4) enthalten, die z.B. aus folgenden Stoffgruppen bestehen können: Polyalkylenglykolether von Fettalkoholen oder Fettaminen, Polyalkylenglykolether und Glycerinester von Fettsäuren mit 12 bis 18 Kohlenstoffatomen, Polyalkylenglykole, höhere Fettsäureamide mit 12 bis 18 Kohlenstoffatomen von Polyalkylenglykolen und/oder Alkylenaminen, quartäre Stickstoffverbindungen, z.B. ethoxylierte Imidazoliniumsalze, Mineralöle und Wachse. Das oder die Gleitmittel werden bevorzugt in der Gesamtkonzentration zwischen 0,05 und 1,5 Gew.-% bezogen auf die gesamte Schlichte, angewendet.

Die erfindungsgemäßen Schlichtemittel können ein oder mehrere Antistatika 5), wie z.B. Lithiumchlorid, Ammoniumchlorid, Cr-III-Salze, organische Titanverbindungen, Arylalkylsulfate- oder Sulfonate, Arylpolyglykolethersulfonate oder quartäre Stickstoffverbindungen, enthalten. Die Antistatika werden bevorzugt in Konzentrationen von 0,01 bis 0,8 Gew.-% angewendet.

Darüber hinaus enthalten die erfindungsgemäßen Schlichten gegebenenfalls noch weitere dem Stand der Technik nach bekannte Hilfs- und Zusatzstoffe 6), wie sie beispielsweise in K.L. Loewenstein "The Manufacturing Technology of Continous Glass Fibres", Elsevier Scientific Publishing Corp., Amsterdam, London, New York, 1983, beschrieben sind.

Die Herstellung der Schlichten kann nach den an sich bekannten Methoden erfolgen. Bevorzugt wird in einem geeigneten Mischbehälter ca. die Hälfte des insgesamt benötigten Wassers vorgelegt und unter Rühren das Bindemittel 2), der Härter 1), und anschließend das Gleitmittel 4) und gegebenenfalls andere, übliche Hilfsmittel 6) zugesetzt. Danach wird der pH-Wert auf 5-7 eingestellt und nun nach Angaben des Herstellers (z.B. UCC, New York) hergestelltes Hydrolysat eines Haftvermittlers z.B. eines Trialkoxysilans zugesetzt. Nach einer weiteren Rührzeit von 15 Minuten ist die Schlichte gebrauchsfertig; gegebenenfalls wird der pH-Wert erneut auf 5-7 angeglichen.

Die Schlichten können über beliebige Methoden auf ein geeignetes Substrat appliziert werden, beispielsweise mit Hilfe geeigneter Vorrichtungen, wie z.B. Sprüh- oder Walzapplikatoren. Geeignete Substrate sind beispielsweise ausgewählt aus der Gruppe Metall, Holz, Glas, Glasfasern, Kohlefasern, Stein, keramische Mineralien, Beton, harte und flexible Kunststoffe der verschiedensten Arten, gewebten und nicht gewebten Textilien, Leder, Papier, Hartfasern, Stroh und Bitumen die vor der Beschlichtung gegebenenfalls auch mit üblichen Grundierungen versehen werden können. Bevorzugte Substrate sind Glasfasern, Kohlefasern, Metalle, Textilien und Leder. Ein besonders bevorzugtes Substrat ist die Glasfaser.

Für die beschlichteten Glasfasern sind sowohl die für die Glasseidenfabrikation verwendeten, bekannten Glastypen wie E-, A-, C-, und S- Glas als auch die anderen an sich bekannten Erzeugnisse der Glasfaserhersteller geeignet. Unter den genannten Glastypen für die Herstellung von Endlosglasfasem besitzen die E-Glasfasem aufgrund ihrer Alkalifreiheit, hohen Zugfestigkeit und hohen Elastizitätsmodul die größte Bedeutung für die Verstärkung von Kunststoffen.

Das Verfahren zur Herstellung, das Verfahren der Beschlichtung und die Nachbearbeitung der Glasfasern ist bekannt und beispielsweise in K.L. Loewenstein "The Manufacturing Technology of Continous Glass Fibres", Elsevier Scientific Publishing Corp., Amsterdam, London, New York, 1983, beschrieben.

Üblicherweise werden die Schlichten auf die mit hoher Geschwindigkeit aus Spinndüsen gezogenen Glasfilamente sofort nach deren Erstarren, d.h. noch vor dem Aufwickeln aufgetragen. Es ist aber auch möglich, die Fasern im Anschluss an den Spinnprozess in einem Tauchbad zu beschlichten. Die beschlichteten Glasfasern können entweder nass oder trocken beispielsweise zu Schnittglas verarbeitet werden. Die Trocknung des End- oder Zwischenproduktes findet bei Temperaturen zwischen 50 bis 200°C, bevorzugt 90 bis 150°C statt. Unter Trocknung ist dabei nicht allein die Entfernung von anderen flüchtigen Bestandteilen zu verstehen, sondern z.B. auch das Festwerden der Schlichtebestandteile. Erst nach beendeter Trocknung hat sich die Schlichte in die fertige Überzugsmasse verwandelt. Der Anteil der Schlichte beträgt, bezogen auf die beschlichteten Glasfasern, bevorzugt 0,1 bis 5,0 Gew.-% besonders bevorzugt 0,1 bis 3,0 Gew.-% und ganz besonders bevorzugt 0,3 bis 1,5 Gew.-%.

Als Matrixpolymere können eine Vielzahl von Thermoplasten bzw. duroplastisch härtbaren Polymeren verwendet werden. Beispielsweise sind als thermoplastische Polymere geeignet: Polyolefine wie Polyethylen oder Polypropylen, Polyvinylchlorid, Polymerisate wie Styrol/Acrylnitril-Copolymere, ABS, Polymethacrylat oder Polyoxymethylen, aromatische und/oder aliphatische Polyamide wie Polyamid-6 oder Polyamid-6,6, Polykondensate wie Polycarbonat, Polyethylenterephthalat, flüssig-kristalline Polyarylester, Polyarylenoxid, Polysulfon, Polyarylensulfid, Polyarylsulfon, Polyethersulfon, Polyarylether oder Polyetherketon oder Polyaddukte wie Polyurethane. Als duroplastisch härtbare Polymere seien beipielsweise genannt: Epoxidharze, ungesättigte Polyesterharze, Phenolharze Aminharze, Polyurethanharze, Polyisocyanurate, Epoxid/Isocyanurat-Kombinationsharze, Furanharze, Cyanuratharze und Bismaleinimidharze.

Gegenstand der vorliegenden Erfindung ist ebenfalls die Verwendung der erfindungsgemäßen Schlichtezusammensetzung zur Herstellung von beschlichteten Glasfasern.

Gegenstand der vorliegenden Erfindung sind darüber hinaus Glasfasern beschlichtet mit den erfindungsgemäßen Schlichten.

### Beispiele

Die Bestimmung der mechanischen Eigenschaften von den erfindungsgemäßen Schlichten erfolgt an freien Filmen. Zur Herstellung der freien Filme benötigt man nicht die vollständigen Schlichtezusammensetzungen sondern nur die filmbildenden Bestandteile wie das wasserdispergierbare blockierte Polyisocyanat 1) und ein filmbildendes Harz 2), die miteinander gemischt werden, da nur diese für die mechanischen Eigenschaften sowie die Hydrolysebeständigkeit der Schlichte bestimmend sind. Die angeführten Mischungen werden hergestellt aus 60 Gew.-% Baybond PU 401 (Anionische-nichtionische PUR-Dispersion mit einem Festkörpergehalt von 40 % und einer mittleren Teilchengröße von 100-300 nm, Bayer AG, DE (filmbildendes Harz 2)) und 40 Gew.-% eines entsprechenden wasserdispergierbaren bzw. wasserlöslichen blockierten Polyisocyanats 1). Die freien Filme werden aus diesen Mischungen wie folgt hergestellt: In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich. Zum Aufbringen der einzelnen Striche werden die Produkte (wässrige Formulierungen werden vorher durch Zugabe von Ammoniak/Polyacrylsäure auf eine Viskosität von 4500 mPa·s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des 100 % Moduls, erfolgt nach DIN 53504 an Filmen > 100 µm Stärke.

Die Filmlagerung unter Hydrolysebedingungen erfolgt gemäß DIN EN 12280-3. Die Bestimmung der Mechanik dieser Filmproben wird nach 24 h Lagerung unter Normklimabedingungen (20°C und 65 % Luftfeuchtigkeit) gemäß DIN 53504 durchgeführt.

Die Bestimmung der mittleren Teilchengrößen (angegeben ist das Zahlenmittel) der PUR-Dispersionen erfolgte mittels Laserkorrelations-Spektroskopie (Gerät: Malvem Zetasizer 1000, Malver Inst. Limited).

Die im folgenden angeführten Mischungen, welche wasserdispergierbare bzw. wasserlöslichen und mit Aralkylaminen blockierte Polyisocyanate enthalten, können in erfindungsgemäße Schlichten überführt werden, in dem man Sie mit den üblichen und bekannten Gleitmitteln 4), Haftvermittlern 3) und Antistatika 5) auf die ebenfalls übliche und bekannte Weise konfektioniert.

### Beispiel 1 (erfindungsgemäß):

108,4 g eines biuretgruppen-haltigen Polyisocyanates auf Basis von 1,6-Diisocyanatohexan (HDI) mit einem NCO-Gehalt von 23,0 % wird bei 40°C vorgelegt. Innerhalb von 10 min werden 91,1 g Polyether LB 25 (Bayer AG, DE, monofunktioneller Polyether auf Ethylenoxid-/Propylenoxidbasis mit einem mittleren Molgewicht von 2250 (OHZ = 25)) und 1,2 g des oben genannten Hydrazin-Adduktes aus 1 Mol Hydrazinhydrat und 2 Mol Propylencarbonat vom Molekulargewicht 236 der Formel III unter Rühren zudosiert. Anschließend heizt man das Reaktionsgemisch auf 90°C und rührt solange bei dieser Temperatur bis der theoretische NCO-Wert erreicht ist. Nach Abkühlen auf 65°C werden innerhalb von 30 min 88,3 g N-tert.-Butylbenzylamin unter Rühren so zugetropft, dass die Temperatur des Gemisches 70°C nicht übersteigt. Anschließend werden 1,5 g Tinuvin^{®} 770 DF (Ciba Spezialitäten GmbH, Lampertheim, DE) zugegeben, 10 min weitergerührt und das Reaktionsgemisch auf 60°C abgekühlt. Die Dispergierung erfolgt durch Zugabe von 713,0 g Wasser (20°C) bei 60°C innerhalb von 30 min. Die Nachrührzeit bei 40°C beträgt 1 h.

Man erhält eine lagerstabile wässrige Dispersion des blockierten Polyisocyanats mit einem Festkörpergehalt von 27,3 %.

### Beispiel 2 (Vergleichsbeispiel)

147,4 g eines biuretgruppen-haltigen Polyisocyanates auf Basis von 1,6-Diisocyanatohexan (HDI) mit einem NCO-Gehalt von 23,0 % wird bei 40°C vorgelegt. Innerhalb von 10 min werden 121,0 g Polyether LB 25 (Bayer AG, DE, monofunktioneller Polyether auf Ethylenoxid-/Propylenoxidbasis mit einem mittleren Molgewicht von 2250 (OHZ = 25)) unter Rühren zudosiert. Anschließend heizt man das Reaktionsgemisch auf 90°C und rührt solange bei dieser Temperatur bis der theoretische NCO-Wert erreicht ist. Nach Abkühlen auf 65°C werden innerhalb von 30 min 62,8 g Butanonoxim unter Rühren so zugetropft, dass die Temperatur des Gemisches 80°C nicht übersteigt. Die Dispergierung erfolgt durch Zugabe von 726,0 g Wasser (T = 20°C) bei 60°C innerhalb von 30 min. Die Nachrührzeit bei 40°C beträgt 1 h.

Man erhält eine lagerstabile wässrige Dispersion des blockierten Polyisocyanats mit einem Festkörpergehalt von 30,0 %.

Die in Tabelle 1 gezeigten Ergebnisse belegen, dass bei der Verwendung des wasserdispergierbaren mit N-tert.-Butylbenzylamin blockierten Vernetzers aus Beispiel 1 eine wesentlich höhere Hydrolysebeständigkeit als mit Vernetzern des Stands der Technik (Beispiel 2) erreicht wird. Darüber hinaus lässt sich anhand der Zugfestigkeit und Bruchdehnung erkennen, dass mit Mischung 1 nach einer Trocknungszeit von 10 min bei 125°C signifikant höhere mechanische Eigenschaften aufgrund der niedrigeren Deblockierungstemperatur des Blockierungsmittels aus Vernetzer gemäß Beispiel 1 (N-tert.-Butylbenzylamin) im Vergleich zu Mischung 2 in der ein Vernetzer mit einem Blockierungsmittel des Stands der Technik (Butanonoxim) (Beispiel 2) enthalten ist, erreicht werden.

**Tabelle 1: Ergebnisse der mechanischen Eigenschaften freier Filme hergestellt aus den Beispielen 1 und 2 in Kombination mit einem Bindemittel**

| | **Mischung 1 (erfindungsgemäß)** | **Mischung 2 (Vergleichsbeispiel)** |
|---|---|---|
| **Filmbildendens Harz 2):** | **Baybond PU 401** | **Baybond PU 401** |
| Anteil | 60 Gew.-% | 60 Gew.-% |

| **Härter 1):** | **Dispersion aus Beispiel 1 (erfindungsgemäß)** | **Dispersion aus Beispiel 2 (Vergleichsbeispiel)** |
|---|---|---|
| Anteil | 40 Gew.-% | 40 Gew.-% |
| Blockierungsmittel | N-tert.-Butylbenzylamin | Butanonoxim |
| mittlere Teilchengröße | 143 nm | 224 nm |
| Trocknungsbedingungen | 10 min, 125 °C | 10 min, 125 °C |

| **Herstellung der Mischung** | **Zugabe von 1) zu 2); 5 min rühren bei Raumtemperatur** | **Zugabe von 1) zu 2); 5 min rühren bei Raumtemperatur** |
|---|---|---|
| **Zugversuch: 0-Wert** | | |
| 100 % Modul [MPa] | 2,7 | 0,4 |
| Zugfestigkeit [MPa] | 20,2 | 4,2 |
| Reißdehnung [%] | 860 | 1540 |

| **Zugversuch nach 7d Hydrolyse** | | |
|---|---|---|
| Zugfestigkeit [MPa] | 19,8 | zerlaufen |
| Reißdehnung [%] | 500 | zerlaufen |

| **Zugversuch nach 14d Hydrolyse** | | |
|---|---|---|
| Zugfestigkeit [MPa] | 18,3 | zerlaufen |
| Reißdehnung [%] | 240 | zerlaufen |

| **Zugversuch nach 4 Wochen Hydrolyse** | | |
|---|---|---|
| Zugfestigkeit [MPa] | 12,2 | zerlaufen |
| Reißdehnung [%] | 190 | zerlaufen |

| **Zugversuch nach 6 Wochen Hydrolyse** | | |
|---|---|---|
| Zugfestigkeit [MPa] | 7,2 | zerlaufen |
| Reißdehnung [%] | 130 | zerlaufen |

| **Zugversuch nach 8 Wochen Hydrolyse** | | |
|---|---|---|
| Zugfestigkeit [MPa] | zerlaufen | zerlaufen |
| Reißdehnung [%] | zerlaufen | zerlaufen |

### Beispiel 3 (erfindungsgemäß):

13,5 g Polyether LB 25 (Bayer AG, DE, monofunktioneller Polyether auf Ethylenoxid-/Propylenoxidbasis mit einem mittleren Molgewicht von 2250 (OHZ = 25)) und 122,6 g N-tert.-Butylbenzylamin werden vorgelegt und unter Rühren auf 90°C aufgeheizt. Anschließend werden 193,0 eines isocyanuratgruppen-haltigen Polyisocyanats auf Basis von 1,6- Diisocyanatohexan (HDI) mit einem NCO-Gehalt von 21,8 % innerhalb von 30 min so zugegeben, dass die Temperatur der Reaktionsmischung 70°C nicht überschreitet. Nach Zugabe von 11,1 g des oben genannten Hydrazin-Adduktes aus 1 Mol Hydrazinhydrat und 2 Mol Propylencarbonat vom Molekulargewicht 236 wird solange bei 70°C gerührt bis der theoretische NCO-Wert erreicht ist. Anschließend werden 3,5 g Tinuvin^{®} 770 DF (Ciba Spezialitäten GmbH, Lampertheim, DE) bei 70°C in 5 min zugegeben und das Reaktionsgemisch weitere 5 min gerührt. 24,6 g des Hydrophilierungsmittel KV 1386 (BASF AG, Ludwigshafen, DE) gelöst in 73,7 g Wasser werden innerhalb von 2 min zudosiert und das Reaktionsgemisch 15 min weitergerührt. Die Dispergierung durch Zugabe von 736,4 g Wasser (T = 60°C) in 10 min. Die Nachrührzeit beträgt 2 h. Man erhält eine lagerstabile Dispersion mit einem Festkörper von 27,6 %.

### Beispiel 4 (Vergleichsbeispiel):

963,0 g eines biuretgruppen-haltigen Polyisocyanats auf Basis von 1,6-Diisocyanatohexan (HDI) mit einem NCO-Gehalt von 23,0 % werden mit 39,2 g Polyether LB 25 (Bayer AG, DE, monofunktioneller Polyether auf Ethylenoxid-/Propylenoxidbasis mit einem mittleren Molgewicht von 2250 (OHZ = 25))und 7,8 g des oben genannten Hydrazin-Adduktes aus 1 Mol Hydrazinhydrat und 2 Mol Propylencarbonat vom Molekulargewicht 236 30 min bei 100°C gerührt. Anschließend wird innerhalb von 20 min 493,0 g ε-Caprolactam so zugegeben, dass die Temperatur des Reaktionsgemisches 110°C nicht übersteigt. Es wird solange bei 110°C gerührt bis der theoretische NCO-Wert erreicht ist und danach auf 90°C abgekühlt. Nach Zugabe von 7,9 g Tinuvin^{®} 770 DF (Ciba Spezialitäten GmbH, Lampertheim, DE) und einer Nachrührzeit von 5 min wird innerhalb von 2 min eine Mischung aus 152,5 g des Hydrophilierungsmittels KV 1386 (BASF AG, Ludwigshafen, DE) und 235,0 g Wasser zudosiert und weitere 7 min temperaturneutral weitergerührt. Im Anschluss daran erfolgt die Dispergierung durch Zugabe von 3341,4 g Wasser. Nach einer Nachrührzeit von 4 h erhält man eine lagerstabile wässrige Dispersion mit einem Festkörpergehalt von 29,9 %.

**Tabelle 2: Ergebnisse der mechanischen Eigenschaften freier Filme hergestellt aus den Beispielen 3 und 4 in Kombination mit einem Bindemittel**

| | **Mischung 3 (erfindungsgemäß)** | **Mischung 4 (Vergleichsbeispiel)** |
|---|---|---|
| **Filmbildendens Harz 2):** | **Baybond PU 401** | **Baybond PU 401** |
| Anteil | 60 Gew.-% | 60 Gew.-% |

| **Härter 1):** | **Dispersion gemäß Beispiel 3 (erfindungsgemäß)** | **Dispersion gemäß Beispiel 4 (Vergleichsbeispiel)** |
|---|---|---|
| Anteil | 40 Gew.-% | 40 Gew.-% |
| Blockierungsmittel | N-tert.-Butylbenzylamin | ε-Caprolactam |
| mittlere Teilchengröße | 95 nm | 235 nm |
| Trocknungsbedingungen | 10 min, 125 °C | 10 min, 125 °C |

| **Herstellung der Mischung** | **Zugabe von 1) zu 2); 5 min rühren bei Raumtemperatur** | **Zugabe von 1) zu 2); 5 min rühren bei Raumtemperatur** |
|---|---|---|
| **Zugversuch: 0-Wert** | | |
| 100 % Modul [MPa] | 1,8 | 1,2 |
| Zugfestigkeit [MPa] | 17,3 | 8,5 |
| Reißdehnung [%] | 880 | 1020 |

| **Zugversuch nach 7d Hydrolyse** | | |
|---|---|---|
| Zugfestigkeit [MPa] | 17,0 | zerlaufen |
| Reißdehnung [%] | 480 | zerlaufen |

| **Zugversuch nach 14d Hydrolyse** | | |
|---|---|---|
| Zugfestigkeit [MPa] | 17,5 | zerlaufen |
| Reißdehnung [%] | 300 | zerlaufen |

| **Zugversuch nach 4 Wochen Hydrolyse** | | |
|---|---|---|
| Zugfestigkeit [MPa] | 12,8 | zerlaufen |
| Reißdehnung [%] | 300 | zerlaufen |

| **Zugversuch nach 6 Wochen Hydrolyse** | | |
|---|---|---|
| Zugfestigkeit [MPa] | 6,5 | zerlaufen |
| Reißdehnung [%] | 160 | zerlaufen |

| **Zugversuch nach 8 Wochen Hydrolyse** | | |
|---|---|---|
| Zugfestigkeit [MPa] | zerlaufen | zerlaufen |
| Reißdehnung [%] | zerlaufen | zerlaufen |

Die in Tabelle 2 gezeigten Ergebnisse belegen, dass bei der Verwendung des wasserdispergierbaren mit N-tert.-Butylbenzylamin blockierten Vernetzers aus Beispiel 3 eine wesentlich höhere Hydrolysebeständigkeit als mit Vernetzern des Stands der Technik (Beispiel 4) erreicht wird. Darüber hinaus lässt sich anhand der Zugfestigkeit und Bruchdehnung erkennen, dass mit Mischung 3 nach einer Trocknungszeit von 10 min bei 125°C signifikant höhere mechanische Eigenschaften aufgrund der niedrigeren Deblockierungstemperatur des Blockierungsmittels aus dem Vernetzer gemäß Beispiel 3 (N-tert.-Butylbenzylamin) im Vergleich zu Mischung 6 in der ein Vernetzer mit einem Blockierungsmittel des Stands der Technik (Caprolactam) (Beispiel 4) enthalten ist, erreicht werden.

### Beispiel 5 (erfindungsgemäß)

192,6 g eines biuretgruppen-haltigen Polyisocyanats auf Basis von 1,6-Diisocyanatohexan (HDI) mit einem NCO-Gehalt von 23,0 % werden mit 7,8 g Polyether LB 25 (Bayer AG, DE, monofunktioneller Polyether auf Ethylenoxid-/Propylenoxidbasis mit einem mittleren Molgewicht von 2250 (OHZ = 25)) 30 min bei 100°C gerührt. Anschließend wird bei 70°C innerhalb von 30 min 142,0 g N-tert.-Butylbenzylamin so zugegeben, dass die Temperatur des Reaktionsgemisches 75°C nicht übersteigt. Es wird solange bei 75°C gerührt bis der theoretische NCO-Wert erreicht ist. Innerhalb von 2 min wird eine Mischung aus 27,5 g des Hydrophilierungsmittels KV 1386 (BASF AG, Ludwigshafen, DE) und 46,8 g Wasser zudosiert und weitere 7 min temperaturneutral weitergerührt. Im Anschluss daran erfolgt die Dispergierung durch Zugabe von 761,3 g Wasser. Nach einer Nachrührzeit von 4 h erhält man eine lagerstabile wässrige Dispersion mit einem Festkörpergehalt von 28,0 %.

### Beispiel 6 (Vergleichsbeispiel):

963,0 g eines biuretgruppen-haltigen Polyisocyanats auf Basis von 1,6-Diisocyanatohexan (HDI) mit einem NCO-Gehalt von 23,0 % werden mit 39,2 g Polyether LB 25 (Bayer AG, DE, monofunktioneller Polyether auf Ethylenoxid-/Propylenoxidbasis mit einem mittleren Molgewicht von 2250 (OHZ = 25)) 30 min bei 100°C gerührt. Anschließend wird innerhalb von 20 min 493,0 g ε-Caprolactam so zugegeben, dass die Temperatur des Reaktionsgemisches 110°C nicht übersteigt. Es wird solange bei 110°C gerührt bis der theoretische NCO-Wert erreicht ist und danach auf 90°C abgekühlt. Nach einer Nachrührzeit von 5 min wird innerhalb von 2 min eine Mischung aus 152,5 g des Hydrophilierungsmittels KV 1386 (BASF AG, Ludwigshafen, DE) und 235,0 g Wasser zudosiert und weitere 7 min temperaturneutral weitergerührt. Im Anschluss daran erfolgt die Dispergierung durch Zugabe von 3325,1 g Wasser. Nach einer Nachrührzeit von 4 h erhält man eine lagerstabile wässrige Dispersion mit einem Festkörpergehalt von 30,0 %.

**Tabelle 3: Ergebnisse der mechanischen Eigenschaften freier Filme hergestellt aus den Beispielen 5 und 6 in Kombination mit einem Bindemittel**

| | **Mischung 5 (erfindungsgemäß)** | **Mischung 6 (Vergleichsbeispiel)** |
|---|---|---|
| **Filmbildendens Harz 2):** | **Baybond PU 401** | **Baybond PU 401** |
| Anteil | 60 Gew.-% | 60 Gew.-% |

| **Härter 1):** | **Dispersion gemäß Beispiel 5 (erfindungsgemäß)** | **Dispersion gemäß Beispiel 6 (Vergleichsbeispiel)** |
|---|---|---|
| Anteil | 40 Gew.-% | 40 Gew.-% |
| Blockierungsmittel | N-tert.-Butylbenzylamin | ε-Caprolactam |
| mittlere Teilchengröße | 110 nm | 153 nm |
| Trocknungsbedingungen | 10 min, 125 °C | 10 min, 125 °C |

| **Herstellung der Mischung:** | **Zugabe von 1) zu 2); 5 min rühren bei Raumtemperatur** | **Zugabe von 1) zu 2); 5 min rühren bei Raumtemperatur** |
|---|---|---|
| **Zugversuch: 0-Wert** | | |
| 100 % Modul [MPa] | 2,0 | 0,8 |
| Zugfestigkeit [MPa] | 16,9 | 8,4 |
| Reißdehnung [%] | 1020 | 1250 |

| **Zugversuch nach 7d Hydrolyse** | | |
|---|---|---|
| Zugfestigkeit [MPa] | 17,8 | zerlaufen |
| Reißdehnung [%] | 190 | zerlaufen |

| **Zugversuch nach 14d Hydrolyse** | | |
|---|---|---|
| Zugfestigkeit [MPa] | 18,0 | zerlaufen |
| Reißdehnung [%] | 240 | zerlaufen |

| **Zugversuch nach 4 Wochen Hydrolyse** | | |
|---|---|---|
| Zugfestigkeit [MPa] | 20,0 | zerlaufen |
| Reißdehnung [%] | 210 | zerlaufen |

| **Zugversuch nach 6 Wochen Hydrolyse** | | |
|---|---|---|
| Zugfestigkeit [MPa] | 15,7 | zerlaufen |
| Reißdehnung [%] | 200 | Zerlaufen |

Die in Tabelle 3 gezeigten Ergebnisse belegen, dass bei der Verwendung von wasserdispergierbaren mit dem N-tert.-Butylbenzylamin blockierten Vernetzer aus Beispiel 5 eine wesentlich höhere Hydrolysebeständigkeit als mit Vernetzern des Stands der Technik (Beispiel 6) erreicht wird. Darüber hinaus lässt sich anhand der Zugfestigkeit und Bruchdehnung erkennen, dass mit Mischung 5 nach einer Trocknungszeit von 10 min bei 125°C signifikant höhere mechanische Eigenschaften aufgrund der niedrigeren Deblockierungstemperatur des Blockierungsmittels aus Vernetzer gemäß Beispiel 5 (N-tert.-Butylbenzylamin) im Vergleich zu Mischung 6 in der ein Vernetzer mit einem Blockierungsmittel des Stands der Technik (Caprolactam) (Beispiel 6) enthalten ist, erreicht werden.

Die Mischungen 1-6 werden z.B. wie folgt zu Schlichten konfektioniert: In einem geeigneten Mischbehälter wird ca. die Hälfte des benötigten Wassers vorgelegt und unter Rühren nacheinander eine der oben genannten Mischungen aus filmbildenden Harz 2) und Vernetzer 1), Gleitmittel 4) (z.B. Breox^{®} 50-A 140, Fa. BP-Chemicals) und ggf. andere, übliche Hilfsmittel 5,6) zugesetzt. Danach wird der pH-Wert auf 5-7 eingestellt und nun nach Angaben des Herstellers (UCC, New York) hergestelltes Hydrolysat aus 3-Aminopropyl-triethoxysilan (A1100) in Wasser zugesetzt. Nach einer weiteren Rührzeit von 15 Minuten ist die Schlichte gebrauchsfertig; ggf. wird der pH-Wert erneut auf 5-7 angeglichen. Bei den so aus Mischung 1, 3 und 5, resultierenden Schlichten handelt es sich dann um erfindungsgemäße Schlichtezusammensetzungen.

| | **Schlichte 1** | **Schlichte 2** | **Schlichte 3** | **Schlichte 4** | **Schlichte 5** | **Schlichte 6** |
|---|---|---|---|---|---|---|
| **Wasser** | 42,0 kg | 42,0 kg | 42,0 kg | 42,0 kg | 42,0 kg | 42,0 kg |
| **Bindemittel** | 15,0 kg Mischung 1 | 15,0 kg Mischung 2 | 15,0 kg Mischung 3 | 15,0 kg Mischung 4 | 15,0 kg Mischung 5 | 15,0 kg Mischung 6 |
| **A 1100** | 0,6 kg | 0,6 kg | 0,6 kg | 0,6 kg | 0,6 kg | 0,6 kg |
| **Breox^{®} 50-A 140** | 0,4 kg | 0,4 kg | 0,4 kg | 0,4 kg | 0,4 kg | 0,4 kg |
| **Wasser** | 42,0 kg | 42,0 kg | 42,0 kg | 42,0 kg | 42,0 kg | 42,0 kg |
| **Gesamt** | 100,0 kg | 100,0 kg | 100,0 kg | 100,0 kg | 100,0 kg | 100,0 kg |

Mit den erfindungsgemäßen Schlichten 1,3 und 5 sowie mit den Schlichten der Vergleichsbeispiele 2,4 und 6 wurden dann in üblicher und bekannter Weise Glasfasern hergestellt, geschlichtet, geschnitten und getrocknet. Die Glasfasern wurden zur Verstärkung in ein Polyamid eincompoundiert. Die Ergebnisse der freien Filme der Mischungen sind in punkto Hydrolysestabilität und mechanischen Eigenschaften mit den Ergebnissen der Schlichten auf der Glasfaser sehr gut vergleichbar. Die mechanischen Eigenschaften der erfindungsgemäßen Schlichten hergestellt aus den Mischungen 1, 3 und 5 zeigen auf der Glasfaser im Vergleich zu den Schlichten aus den Mischungen 2, 4 und 6 signifikant verbesserte mechanische Eigenschaften und stark verbesserte Hydrolysebeständigkeiten.

## Patentansprüche

1. Schlichtezusammensetzung enthaltend:
1) wasserdispergierbare bzw. wasserlösliche und mit Aralkylaminen blockierte Polyisocyanate,
2) filmbildende Harze,
3) Haftvermittler,
4) Gleitmittel
5) gegebenenfalls Antistatika, sowie
6) gegebenenfalls weitere Hilfs- und Zusatzstoffe.

2. Schlichtezusammensetzung gemäß Anspruch 1, **dadurch gekennzeichnet, dass** das wasserdispergierbare bzw. wasserlösliche blockierte Polyisocyanate 1) aufgebaut ist aus:
A) mindestens einem Polyisocyanat mit aliphatisch, cycloaliphatisch araliphatisch und/oder aromatisch gebundenen Isocyanatgruppen,
B) mindestens einer ionischen und/oder potentiell ionischen und/oder nichtionischen Verbindung,
C) mindestens einem Blockierungsmittel, welches zu mindestens 20 % aus Aralkylaminen besteht und
D) gegebenenfalls einem oder mehreren (cyclo)aliphatischen Mono- bzw. Polyaminen mit 1 bis 4 Aminogruppen des Molekulargewichtsbereichs bis 300,
E) gegebenenfalls einem oder mehreren mehrwertigen Alkoholen mit 1 bis 4 Hydroxylgruppen des Molekulargewichtsbereichs bis 250 und
F) gegebenenfalls Stabilisierungsmittel und andere Hilfsstoffen sowie
G) gegebenenfalls Lösemittel.

3. Schlichtezusammensetzung gemäß Anspruch 1, **dadurch gekennzeichnet, dass** das wasserdispergierbare bzw. wasserlösliche blockierte Polyisocyanate 1) aufgebaut ist aus:
A) 20 bis 80 Gew.-% mindestens einem Polyisocyanat mit aliphatisch, cycloaliphatisch, araliphatisch und/oder aromatisch gebundenen Isocyanatgruppen,
B) 1 bis 40 Gew.-% mindestens einer ionischen und/oder potentiell ionischen und/oder nichtionischen Verbindung,
C) 15 bis 60 Gew.-% mindestens einem Blockierungsmittel, welches zu mindestens 20 % aus Aralkylaminen besteht und
D) 0 bis 15 Gew.-% eines oder mehrerer (cyclo)aliphatischen Mono- bzw. Polyamine mit 1 bis 4 Aminogruppen des Molekulargewichtsbereichs bis 300,
E) 0 bis 15 Gew.-% eines oder mehreren mehrwertigen Alkoholen mit 1 bis 4 Hydroxylgruppen des Molekulargewichtsbereichs bis 250,
F) 0 bis 15 Gew.-% eines Stabilisierungsmittels bzw. Stabilisierungsmittelgemisches, sowie
G) 0 bis 20 Gew.-% mindestens eines Lösemittels.

4. Schlichtezusammensetzung gemäß Anspruch 1, **dadurch gekennzeichnet, dass** das wasserdispergierbare bzw. wasserlösliche blockierte Polyisocyanate 1) aufgebaut ist aus:
A) 25 bis 75 Gew.-% mindestens einem Polyisocyanat mit aliphatisch, cycloaliphatisch, araliphatisch und/oder aromatisch gebundenen Isocyanatgruppen,
B) 1 bis 35 Gew.-% mindestens einer ionischen und/oder potentiell ionischen und/oder nichtionischen Verbindung,
C) 20 bis 50 Gew.-% mindestens einem Blockierungsmittel, welches zu mindestens 20 % aus Aralkylaminen besteht und
D) 0 bis 10 Gew.-% eines oder mehrerer (cyclo)aliphatischen Mono- bzw. Polyamine mit 1 bis 4 Aminogruppen des Molekulargewichtsbereichs bis 300,
E) 0 bis 10 Gew.-% eines oder mehreren mehrwertigen Alkoholen mit 1 bis 4 Hydroxylgruppen des Molekulargewichtsbereichs bis 250
F) 0 bis 15 Gew.-% eines Stabilisierungsmittels bzw. Stabilisierungsmittelgemisches, sowie
G) 0 bis 15 Gew.-% mindestens eines Lösemittels.

5. Schlichtezusammensetzung gemäß Anspruch 1, **dadurch gekennzeichnet, dass** das wasserdispergierbare bzw. wasserlösliche blockierte Polyisocyanate 1) aufgebaut ist aus:
A) 30 bis 70 Gew.-% mindestens einem Polyisocyanat mit aliphatisch, cycloaliphatisch, araliphatisch und/oder aromatisch gebundenen Isocyanatgruppen,
B) 5 bis 30 Gew.-% mindestens einer ionischen und/oder potentiell ionischen und/oder nichtionischen Verbindung,
C) 25 bis 45 Gew.-% mindestens einem Blockierungsmittel, welches zu mindestens 20 % aus Aralkylaminen besteht und
D) 0 bis 5 Gew.-% eines oder mehrerer (cyclo)aliphatischen Mono- bzw. Polyamine mit 1 bis 4 Aminogruppen des Molekulargewichtsbereichs bis 300,
E) 0 bis 5 Gew.-% eines oder mehreren mehrwertigen Alkoholen mit 1 bis 4 Hydroxylgruppen des Molekulargewichtsbereichs bis 250
F) 0 bis 5 Gew.-% eines Stabilisierungsmittels bzw. Stabilisierungsmittelgemisches, sowie
G) 0 bis 10 Gew.-% mindestens eines Lösemittels.

6. Schlichtezusammensetzung gemäß Anspruch 1, **dadurch gekennzeichnet, dass** die Komponente A) der wasserdispergierbaren bzw. wasserlöslichen blockierten Polyisocyanate 1) einen Gehalt an Isocyanatgruppen (unblockiert und blockiert) von 5,0 bis 27,0 Gew.-% aufweist.

7. Schlichtezusammensetzung gemäß Anspruch 1, **dadurch gekennzeichnet, dass** die Isocyanatgruppen der Komponente A) der wasserdispergierbaren blockierten bzw. wasserlöslichen Polyisocyanate 1) zu mindestens 50 % in blockierter Form vorliegen.

8. Schlichtezusammensetzung gemäß Anspruch 1, **dadurch gekennzeichnet, dass** das wasserdispergierbare bzw. wasserlösliche blockierte Polyisocyanate 1) als Blockierungsmittel sekundäre Benzylamine enthält.

9. Schlichtezusammensetzung gemäß Anspruch 1, **dadurch gekennzeichnet, dass** wasserdispergierbare bzw. wasserlösliche blockierte Polyisocyanate 1) als Blockierungsmittel N-tert. Butylbenzylamin enthält.

10. Verwendung der Schlichtezusammensetzung gemäß Anspruch 1 in oder als Glasfaserschlichten.

11. Verwendung der Schlichtezusammensetzung gemäß Anspruch 1 zur Beschlichtung von Glasfasern.

12. Verwendung der Schlichtezusammensetzung gemäß Anspruch 1, **dadurch gekennzeichnet, dass** die Lösung oder Dispersion der Komponente 1) einen Festkörpergehalt von 10 bis 70 Gew.-% aufweist.

13. Verwendung der Schlichtezusammensetzung gemäß Anspruch 1, **dadurch gekennzeichnet, dass** die Lösung oder Dispersion des Polyisocyanates 1) einen Anteil von kleiner 15 Gew.-% G) an der Gesamtzusammensetzung der Komponente 1) aufweist.

14. Mit der Schlichtezusammensetzung gemäß Ansprüchen 1 bis 9 beschlichtete Glasfasern.

## Claims

1. Sizing composition containing:
1) water-dispersible or water-soluble polyisocyanates blocked with aralkylamines,
2) film-forming resins,
3) adhesion promoters,
4) lubricants,
5) optionally antistatics, and
6) optionally other auxiliary substances and additives.

2. Sizing composition according to claim 1, **characterised in that** the water-dispersible or water-soluble blocked polyisocyanate 1) is synthesised from:
A) at least one polyisocyanate having aliphatically, cycloaliphatically, araliphatically and/or aromatically bound isocyanate groups,
B) at least one ionic and/or potentially ionic and/or non-ionic compound,
C) at least one blocking agent comprising at least 20% aralkylamines and
D) optionally one or more (cyclo)aliphatic monoamines or polyamines having 1 to 4 amino groups in the molecular weight range up to 300,
E) optionally one or more polyhydric alcohols having 1 to 4 hydroxyl groups in the molecular weight range up to 250 and
F) optionally stabilisers and other auxiliary substances and
G) optionally solvents.

3. Sizing composition according to claim 1, **characterised in that** the water-dispersible or water-soluble blocked polyisocyanate 1) is synthesised from:
A) 20 to 80 wt.% of at least one polyisocyanate having aliphatically, cycloaliphatically, araliphatically and/or aromatically bound isocyanate groups,
B) 1 to 40 wt.% of at least one ionic and/or potentially ionic and/or non-ionic compound,
C) 15 to 60 wt.% of at least one blocking agent comprising at least 20% aralkylamines and
D) 0 to 15 wt.% of one or more (cyclo)aliphatic monoamines or polyamines having 1 to 4 amino groups in the molecular weight range up to 300,
E) 0 to 15 wt.% of one or more polyhydric alcohols having 1 to 4 hydroxyl groups in the molecular weight range up to 250,
F) 0 to 15 wt.% of a stabiliser or blend of stabilisers, and
G) 0 to 20 wt.% of at least one solvent.

4. Sizing composition according to claim 1, **characterised in that** the water-dispersible or water-soluble blocked polyisocyanate 1) is synthesised from:
A) 25 to 75 wt.% of at least one polyisocyanate having aliphatically, cycloaliphatically, araliphatically and/or aromatically bound isocyanate groups,
B) 1 to 35 wt.% of at least one ionic and/or potentially ionic and/or non-ionic compound,
C) 20 to 50 wt.% of at least one blocking agent comprising at least 20% aralkylamines and
D) 0 to 10 wt.% of one or more (cyclo)aliphatic monoamines or polyamines having 1 to 4 amino groups in the molecular weight range up to 300,
E) 0 to 10 wt.% of one or more polyhydric alcohols having 1 to 4 hydroxyl groups in the molecular weight range up to 250,
F) 0 to 15 wt.% of a stabiliser or blend of stabilisers, and
G) 0 to 15 wt.% of at least one solvent.

5. Sizing composition according to claim 1, **characterised in that** the water-dispersible or water-soluble blocked polyisocyanate 1) is synthesised from:
A) 30 to 70 wt.% of at least one polyisocyanate having aliphatically, cycloaliphatically, araliphatically and/or aromatically bound isocyanate groups,
B) 5 to 30 wt.% of at least one ionic and/or potentially ionic and/or non-ionic compound,
C) 25 to 45 wt.% of at least one blocking agent comprising at least 20% aralkylamines and
D) 0 to 5 wt.% of one or more (cyclo)aliphatic monoamines or polyamines having 1 to 4 amino groups in the molecular weight range up to 300,
E) 0 to 5 wt.% of one or more polyhydric alcohols having 1 to 4 hydroxyl groups in the molecular weight range up to 250,
F) 0 to 5 wt.% of a stabiliser or blend of stabilisers, and
G) 0 to 10 wt.% of at least one solvent.

6. Sizing composition according to claim 1, **characterised in that** component A) of the water-dispersible or water-soluble blocked polyisocyanate 1) has a content of isocyanate groups (unblocked and blocked) of 5.0 to 27.0 wt.%.

7. Sizing composition according to claim 1, **characterised in that** at least 50% of the isocyanate groups in component A) of the water-dispersible blocked or water-soluble polyisocyanate 1) are present in blocked form.

8. Sizing composition according to claim 1, **characterised in that** the water-dispersible or water-soluble blocked polyisocyanate 1) contains secondary benzylamines as blocking agents.

9. Sizing composition according to claim 1, **characterised in that** the water-dispersible or water-soluble blocked polyisocyanate 1) contains N-tert-butylbenzylamine as blocking agent.

10. Use of the sizing composition according to claim 1 in or as glass fibre sizes.

11. Use of the sizing composition according to claim 1 for the sizing of glass fibres.

12. Use of the sizing composition according to claim 1, **characterised in that** the solution or dispersion of component 1) has a solids content of 10 to 70 wt.%.

13. Use of the sizing composition according to claim 1, **characterised in that** the solution or dispersion of the polyisocyanate 1) has a content of less than 15 wt.% of G) in the overall composition of component 1).

14. Glass fibres sized with the sizing composition according to claims 1 to 9.

## Revendications

1. Composition d'ensimage contenant :
1) des polyisocyanates bloqués par des aralkylamines, dispersables ou solubles dans l'eau,
2) des résines filmogènes,
3) des agents d'adhérence,
4) des agents lubrifiants,
5) le cas échéant des agents antistatiques, et
6) le cas échéant d'autres produits auxiliaires et additifs.

2. Composition d'ensimage selon fa revendication 1, **caractérisée en ce que** le polylsocyanate bloqué, soluble ou dispersable dans l'eau, 1), est constitué de :
A) au moins un polyisocyanate à groupes isocyanate à liaisons aliphatiques, cycloaliphatiques, araliphatiques et/ou aromatiques,
B) au moins un composé ionique et/ou potentiellement ionique et/ou non ionique,
C) au moins un agent bloquant consistant pour au moins 20 % en aralkylamines, et
D) le cas échéant une ou plusieurs mono- ou poly-amines (cyclo)aliphatiques contenant 1 à 4 groupes amino et dont le poids moléculaire peut aller jusqu'à 300,
E) le cas échéant un ou plusieurs alcools polyvalents contenant 1 à 4 groupes hydroxy, et à un poids moléculaire pouvant aller jusqu'à 250, et
F) le cas échéant des agents stabilisants et d'autres produits auxiliaires, et
G) le cas échéant des solvants.

3. Composition d'ensimage selon la revendication 1, **caractérisée en ce que** le polyisocyanate bloqué, soluble ou dispersable dans l'eau 1) est constitué de :
A 20 à 80 % en poids d'au moins un polyisocyanate à groupes isocyanate à liaisons aliphatiques, cycloaliphatiques, araliphatiques et/ou aromatiques,
B) 1 à 40 % en poids d'au moins un composé ionique et/ou potentiellement ionique et/ou non ionique,
C) 15 à 60 % en poids d'au moins un agent bloquant consistant lui-même pour au moins 20 % en aralkylamines et
D) 0 à 15 % en poids d'une ou plusieurs mono- ou poly-amines (cyclo)aliphatiques contenant 1 à 4 groupes amino et à un poids moléculaire pouvant aller jusqu'à 300,
E) 0 à 15 % en poids d'un ou plusieurs alcools polyvalents contenant 1 à 4 groupes hydroxy et dont le poids moléculaire peut aller jusqu'à 250,
F) 0 à 15 % en poids d'un agent stabilisant ou d'un mélange d'agents stabilisants et
G) 0 à 20 % en poids d'au moins un solvant.

4. Composition d'ensimage selon la revendication 1, **caractérisée en ce que** le polyisocyanate bloqué, soluble ou dispersable dans l'eau 1) est constitué de :
A) 25 à 75 % en poids d'au moins un polyisocyanate à groupes isocyanate à liaisons aliphatiques, cycloaliphatiques, araliphatiques et/ou aromatiques,
B) 1 à 35 % en poids d'au moins un composé ionique et/ou potentiellement ionique et/ou non ionique.
C) 20 à 50 % en poids d'au moins un agent bloquant consistant pour au moins 20 % en aralkylamines et
D) 0 à 10 % en poids d'une ou plusieurs mono- ou poly-amines (cyclo)aliphatiques contenant 1 à 4 groupes amino, à un poids moléculaire pouvant aller jusqu'à 300,
E) 0 à 10 % en poids d'un ou plusieurs alcools polyvalents contenant 1 à 4 groupes hydroxy et à un poids moléculaire qui peut aller jusqu'à 250
F) 0 à 15 % en poids d'un agent stabilisant ou d'un mélange d'agents stabilisants, et
G) 0 à 15 % en poids d'au moins un solvant.

5. Composition d'ensimage selon la revendication 1, **caractérisée en ce que** le polyisocyanate bloqué, soluble ou dispersable dans l'eau 1) est constitué de :
A) 30 à 70 % en poids d'au moins un polyisocyanate à groupes isocyanate à liaisons aliphatiques, cycloaliphatiques, araliphatiques et/ou aromatiques,
B) 5 à 30 % en poids d'au moins un composé ionique et/ou potentiellement ionique et/ou non ionique,
C) 25 à 45 % en poids d'au moins un agent bloquant consistant pour au moins 20 % en aralkylamines et
D) 0 à 5 % en poids d'une ou plusieurs mono- ou poly-amines (cyclo)aliphatiques contenant 1 à 4 groupes amino et à un poids moléculaire qui peut aller jusqu'à 300,
E) 0 à 5 % en poids d'un ou plusieurs alcools polyvalents contenant 1 à 4 groupes hydroxy et à un poids moléculaire pouvant aller jusqu'à 250,
F) 0 à 5 % en poids d'un agent stabilisant ou d'un mélange d'agents stabilisants, et
G) 0 à 10 % en poids d'au moins un solvant.

6. Composition d'ensimage selon la revendication 1, **caractérisée en ce que** le composant A) des polyisocyanates bloqués solubles ou dispersables dans l'eau, 1) a une teneur en groupes isocyanate (bloqués ou non) de 5,0 à 27,0 % en poids.

7. Composition d'ensimage selon la revendication 1, **caractérisée en ce que** les groupes isocyanate du composant A) des polyisocyanates bloqués solubles ou dispersables dans l'eau 1) sont à l'état bloqué pour au moins 50 %.

8. Composition d'ensimage selon la revendication 1, **caractérisée en ce que** les agents bloquants des polyisocyanates bloqués solubles ou dispersables dans l'eau 1) sont des benzylamines secondaires.

9. Composition d'ensimage selon la revendication 1, **caractérisée en ce que** l'agent bloquant des polyisocyanates bloqués, solubles ou dispersables dans l'eau 1), est la N-tert.-butylbenzylamine.

10. Utilisation de la composition d'ensimage selon la revendication 1 en tant que produit d'ensimage pour fibres de verre ou dans des produits d'ensimage pour fibres de verre.

11. Utilisation de la composition d'ensimage selon la revendication 1 pour l'ensimage de fibres de verre.

12. Utilisation de la composition d'ensimage selon la revendication 1, **caractérisée en ce que** la solution ou dispersion du composant 1) est à une teneur en matières solides de 10 à 70 % en poids.

13. Utilisation de la composition d'ensimage selon la revendication 1, **caractérisée en ce que** la solution ou dispersion du polyisocyanate 1) a une teneur en le composant G) représentant moins de 15 % du poids total du composant 1).

14. Fibres de verre ensimées par la composition d'ensimage selon les revendications 1 à 9.
